# EUROPÄISCHE PATENTSCHRIFT

(11) **EP 2 863 172 B1**
(45) Veröffentlichungstag und Bekanntmachung des Hinweises auf die Patenterteilung: **09.05.2018**
(21) Anmeldenummer: 13189098.0
(22) Anmeldetag: 17.10.2013
(51) Int. Cl.: G01B 21/08

(54) **Vorrichtung und Verfahren zur zerstörungsfreien Messung der Schichtdicke eines Kunststoffschaums**
Device and method for non-destructive measurement of the thickness of a layer of a plastic foam
Dispositif et procédé destinés à la mesure non destructrice de l'épaisseur de couche d'une mousse plastique

(43) Veröffentlichungstag der Anmeldung: 22.04.2015
(73) Patentinhaber: SMP Deutschland GmbH, 79268 Bötzingen (DE)
(72) Erfinder: Ziser, Tobias, 79369 Wyhl (DE)
(74) Vertreter: Westphal, Mussgnug & Partner Patentanwälte mbB

(56) Entgegenhaltungen:
- EP-A1- 0 499 765
- FR-A1- 2 605 096
- JP-A- S6 013 209

## Beschreibung

Vorrichtung und Verfahren zur zerstörungsfreien Messung der Schichtdicke eines Kunststoffschaums bei einem Material mit einer zumindest abschnittsweise von mindestens einer Seite zugänglichen, auf einer Hautschicht angeordneten Kunststoffschaumschicht.

Bei der Herstellung von Kunststoffformteilen, insbesondere im Zusammenhang mit dem Fahrzeugbau, spielen schichtförmig aus unterschiedlichen Materialarten aufgebaute Materialien, die auch als "Sandwich-Strukturen" bezeichnet werden, eine wesentliche Rolle.

Ein konkretes Beispiel für die Verwendung derartiger Sandwich-Materialien sind Instrumententafeln für Kraftfahrzeuge, die eine dem Fahrzeuginnenraum zugewandte PVC-Haut aufweisen, welche mit einem Kunststoffschaum, z.B. aufgeschäumtem Polyurethan, verbunden ist, der seinerseits in Verbindung zu einem glasfaserverstärkten Kunststoffträger steht. Bei der Verwendung solcher Instrumententafeln muss sichergestellt sein, dass der Airbag, der vom Fahrgastraum aus gesehen hinter der Instrumententafel liegt, sich entfalten kann. Dafür werden Sollbruchstellen in das Sandwichmaterial der Instrumententafel eingebracht, indem die PVC-Haut vor dem Herstellen des Sandwich-Materials an der entsprechenden Stelle von unten her eingeschnitten wird und nach dem Verbinden des Kunststoff-trägers über die Kunststoffschaumschicht mit der Haut an den Sollbruchstellen Kunststoffträger und ein Teil der Kunststoffschaumschicht entfernt, beispielsweise durch einen Industrieroboter herausgefräst.

Dabei ist die Tiefe der verbleibenden Kunststoffschaumschicht von wesentlicher Bedeutung. Je dicker diese Schicht ist, desto höher ist der Kraftaufwand für den Airbag beim Durchbrechen der Instrumententafel und desto stärker kommt es zu Partikelflug von Kunststoffschaumteilfragmenten im Fahrzeuginnenraum. Andererseits kann es bei einer im Bereich der Ausfräsungen verbleiben Kunststoffschaumschicht, die zu dünn ist, dazu kommen, dass durch Einwirkung von UV-Strahlung die Frässtellen für die Fahrzeuginsassen sichtbar werden, was ebenfalls inakzeptabel ist.

Aus diesem Grund fordern z.B. derartige Instrumententafeln verbauende Automobilhersteller eine turnusmäßige Überprüfung der Dicke der verbleibenden Kunststoffschaumschicht im Bereich der eingefrästen Sollbruchstellen, die den Durchbruch des sich entfaltenden Beifahrerairbags ermöglichen sollen, an einzelnen Exemplaren der Produktionsserie.

Nach dem derzeitigen Stand der Technik werden diese Überprüfungen zerstörend durchgeführt. In einem Teilbereich der Instrumententafel wird in Handarbeit die Haut abgezogen, die darunter liegende Kunststoffschaumschicht wird vom Träger entfernt und Probestücke, die Frässtellen enthalten, werden aus der entfernten Kunststoffschaumschicht herauspräpariert, um dann unter einem Mikroskop im Hinblick auf die Dickenanforderungen vermessen zu werden. So geprüfte Instrumententafeln können natürlich nicht mehr verbaut werden. Dementsprechend muss für eine gegebene Serie ein Überschuss von Instrumententafeln hergestellt werden, um die für die zerstörende Prüfung benötigte Zahl von Überstücken zu haben, was Mehrkosten mit sich bringt. Darüber hinaus ist diese Untersuchung auch für geschulte Mitarbeiter mit beträchtlichem Zeitaufwand verbunden, was die Kosten weiter erhöht. JP 60 013209 A offenbart eine zerstörungsfreie Messung einer Schichtdicke, bei der eine mit einer Nadel bestückte Antasteinheit vorwärts bewegt wird.

Die Aufgabe der Erfindung besteht somit darin, eine Vorrichtung und ein Verfahren anzugeben, mit dem eine nicht zerstörende Überprüfung der Dicke einer auf einer Hautschicht angeordneten Kunststoffschicht ermöglicht wird.

Diese Aufgabe wird gelöst durch eine Vorrichtung mit den Merkmalen des Patentanspruchs 1 und ein Verfahren mit den Merkmalen des Patentanspruchs 10. Vorteilhafte Weiterbildungen der Erfindung sind Gegenstand der abhängigen Patentansprüche.

Die erfindungsgemäße Vorrichtung zur zerstörungsfreien Messung der Schichtdicke eines Kunststoffschaums bei einem Material mit einer zumindest abschnittsweise von mindestens einer Seite zugänglichen, auf einer Hautschicht angeordneten Kunststoffschaumschicht verfügt zumindest über die folgenden Baugruppen:
- eine verfahrbare Schaumantasteinheit, die eine Anlagefläche für den Kunststoffschaum aufweist,
- eine verfahrbare Hautantasteinheit, die eine Nadel zum Eindringen in die und Durchdringen der auf der Hautschicht angeordneten Kunststoffschaumschicht bis zur Hautschicht aufweist, und
- einen Sensor zur Bestimmung eines Wegunterschieds zwischen dem bei einem Verfahren der Schaumantasteinheit zurückgelegten Weg und dem bei einem Verfahren der Hautantasteinheit zurückgelegten Weg.

Der Begriff "verfahrbare Schaumantasteinheit" steht dabei ganz allgemein für eine mechanische Struktur, im einfachsten Fall einen Träger für die Anlagefläche, der direkt verfahren wird, aber auch komplexere mechanische Anordungen, bei denen z.B. eine - dann als Schaumantastelement bezeichnete- Trägerstruktur, mit welcher die Anlagefläche verbunden oder an der sie auswechselbar befestigt ist, in einer Führung gelagert ist, die ihrerseits verfahrbar ist.

In analoger Weise steht der Begriff "verfahrbare Hautantasteinheit" ganz allgemein für eine mechanische Struktur, im einfachsten Fall einen Träger, der direkt verfahren wird, aber auch komplexere mechanische Anordungen, bei denen z.B. eine - dann als Nadelträger bezeichnete- Trägerstruktur, mit welcher die Nadel verbunden oder an der sie auswechselbar befestigt ist, in einer Führung gelagert ist, die ihrerseits verfahren wird.

Der Erfindung liegt die Erkenntnis zu Grunde, dass -ggf. nach geeigneter Offsetbestimmung- die Dicke einer Kunststoffschaumschicht dadurch ermittelt werden kann, dass mit einem Sensor ein Wegunterschied zwischen den Verfahrwegen der nicht in den Kunststoffschaum eindringenden Schaumantasteinheit und der Hautantasteinheit, die mit ihrer Nadel in den Kunststoffschaum eindringen und den Kunststoffschaum bis zur Hautschicht durchdringen kann bestimmt wird, der -ggf. nach Berücksichtigung von Korrekturparametern, z.B. eines Offsets-, dann die gesuchte Dickeninformation liefert.

Insbesondere ist mit einer derartigen Vorrichtung möglich, die Restschaumdicke eines Kunststoffschaums in der Airbagfräsung (d.h. an einer in das Material eingefrästen Sollbruchstelle) einer als Sandwichstruktur mit PVC-Haut, PUR-Schaum und (glasfaserverstärktem) Kunststoffträger zerstörungsfrei zu bestimmen.

Dabei sind selbstverständlich die Schaumantasteinheit und die Hautantasteinheit so dimensioniert, dass sie denselben zugänglichen Bereich untersuchen (also z.B. in dieselbe Airbagfräsung hineingefahren werden).

Zweckmäßigerweise, aber nicht zwingend, sind die Schaumantasteinheit und die Hautantasteinheit so gelagert, dass sie in derselben Richtung verschiebbar sind.

In der Regel, aber ebenfalls nicht zwingend, wird das Verfahren der Schaumantasteinheit und der Hautantasteinheit durch eine Antriebseinheit mit mindestens einem Motor erfolgen, die von einer Steuerschaltung oder Steuerung kontrolliert wird.

Wegen der dadurch erzielten signifikanten Verbesserung der Reproduzierbarkeit der Messergebnisse ist es besonders bevorzugt, wenn ein Sensor zum Detektieren des Wirkens einer Kraft auf die Anlagefläche, insbesondere des Aufstehens der Anlagefläche auf dem Kunststoffschaum, dessen Signal als Startpunkt für die Bestimmung des Wegunterschieds mit dem Sensor zur Bestimmung des Wegunterschieds verwendbar ist, vorhanden ist.

Beispielsweise kann das Signal des Sensors zum Detektieren des Wirkens einer Kraft auf die Anlagefläche verwendet werden, um bei einem als digitaler Messtaster ausgeführten Sensor zur Bestimmung des Wegunterschieds den Startpunkt für eine Weglängenbestimmung zu setzen.

Eine besonders bevorzugte Möglichkeit dazu, das Aufliegen der Anlagefläche auf dem Kunststoffschaum zu detektieren wird erreicht, wenn die verfahrbare Schaumantasteinheit eine (verfahrbare) Führung aufweist, in der ein Schaumantastelement, das die Anlagefläche für den Kunststoffschaum aufweist, derart verschiebbar gelagert ist, dass beim Wirken einer Kraft auf die Anlagefläche, insbesondere bei einem Aufstehen der Anlagefläche für den Kunststoffschaum auf dem Kunststoffschaum, das Schaumantastelement in der Führung verschoben wird und dass der Sensor zum Detektieren des Wirkens einer Kraft auf die Anlagefläche, ein Positions-, Druck- oder Abstandssensor zur Überwachung einer Verschiebung des Schaumantastelements in der Führung ist.

Mit anderen Worten wird beim Verfahren der Schaumantasteinheit die gesamte Schaumantasteinheit mitsamt der Führung verfahren. Trifft das in der Führung, beispielsweise durch Verstiftung in einem im Schaumantastelement vorgesehenen Langloch, seinerseits verschiebbar gelagerte Schaumantastelement dann auf die Kunststoffschaumschicht, entsteht eine Kraft, die zu einer Bewegung des Schaumantastelements relativ zu seiner Führung führt, die dann z.B. optisch oder induktiv von einem Sensor oder auch von einem Drucksensor nachgewiesen werden kann und zur Ausgabe des Steuersignals führt. Dabei muss die Verschiebung zwischen Schaumantastelement und seiner Führung leichtgängig sein, damit die Kunststoffschaumschicht nicht durch das Antastelement verformt wird, was zu einer Verfälschung der Messergebnisse führen könnte. Diese Leichtgängigkeit stellt auch sicher, dass das Schaumantastelement nach dem Abschluss der Messung, wenn die Schaumantasteinheit wieder in ihre Ausgangsposition verfahren wird, unter dem Einfluss der Schwerkraft wieder in seine Grundposition zurückkehrt.

Um die Reproduzierbarkeit der Messergebnisse weiter zu verbessern ist es zweckmäßig, wenn auch ein Sensor zum Detektieren des Aufstoßens der Nadel der Hautantasteinheit auf der Hautschicht, dessen Signal als Endpunkt für die Bestimmung des Wegunterschieds mit dem Sensor zur Bestimmung des Wegunterschieds verwendbar ist, vorhanden ist.

Ein besonders vorteilhafter Nachweis des Auftreffens der Nadel auf die Hautschicht wird durch eine Ausgestaltung der Vorrichtung erreicht, bei der die verfahrbare Hautantasteinheit eine Nadelhalterung, in der die Nadel gelagert ist und eine (verfahrbare) Führung aufweist, in der die Nadelhalterung derart verschiebbar gelagert ist, dass beim Wirken einer Kraft auf die Nadel, die die beim Durchdringen des Kunststoffschaums mit der Nadel auf die Nadel wirkende Kraft übersteigt, insbesondere beim Aufstehen der Nadel auf der Hautschicht, die Nadelhalterung in der Führung verschoben wird und dass der Sensor zum Detektieren des Aufstoßens der Nadel der Hautantasteinheit auf der Hautschicht ein Positions-, Druck- oder Abstandssensor zur Überwachung einer Verschiebung der Nadelhalterung in der Führung ist.

Wie bei der bereits diskutierten Schaumantasteinheit werden somit Führung und Nadelhalterung gemeinsam verschoben, bis das Auftreffen der Nadel auf der Hautschicht zu einer spürbaren Druckerhöhung führt. Wichtig ist dabei, dass hier ein gewisser Widerstand gegen die Verschiebung der Nadelhalterung in der Führung gewährleistet werden muss, damit nicht schon die Kräfte, die beim Durchstechen der Kunststoffschaumschicht auf die Nadel wirken, zur Betätigung des Sensors führen. Praktisch realisiert werden kann dies beispielsweise dadurch, dass die Nadelhalterung über eine Druckfeder an der Führung der Hautantasteinheit abgestützt wird und der Sensor erst dann schaltet, wenn die Druckfeder um ein gegebenes Maß zusammengedrückt wurde. Die Druckfeder stellt dann auch die Rückkehr der Nadelhalterung in eine definierte Ausgangsposition sicher, wenn die Nadelhalterung nicht mehr über die Nadel an der Hautschicht abgestützt ist.

Die Messgenauigkeit der Vorrichtung kann noch weiter gesteigert werden, wenn die Hautantasteinheit über einen Motor angetrieben wird, wenn die Schaumantasteinheit bei einer Bewegung der Hautantasteinheit über eine dehnbare Verbindung zwischen Hautantasteinheit und Schaumantasteinheit mitgezogen wird und wenn eine Fixiereinheit zum Fixieren der Schaumantasteinheit in einer definierten Position, insbesondere in der Position in der der Sensor schaltet, vorhanden ist. Die Fixiereinheit, die beispielsweise durch einen Pneumatikzylinder, der gegen die Schaumantasteinheit gepresst wird, realisiert werden kann, stellt dabei sicher, dass selbst dann, wenn beim Eindringen der Nadel der Hautantasteinheit in den Kunststoffschaum dieser geringfügig verformt wird sichergestellt ist, dass die Schaumantasteinheit nicht nachgefahren wird, was zu einer Verfälschung der Messung führen würde.

Das Vorsehen einer dehnbaren Verbindung zwischen der angetriebenen Hautantasteinheit und der nicht angetriebenen Schaumantasteinheit führt dazu, dass nur ein Antrieb notwendig ist, was Kosten spart und die Bestimmung des Wegunterschieds vereinfacht wird. Die Dehnbarkeit der Verbindung, die beispielsweise als Zugfeder ausgestaltet sein kann, ist dabei wesentlich, um die notwendige Möglichkeit zum weiteren Verfahren der Hautantasteinheit nachdem die Schaumantasteinheit durch die ihr zugeordnete Fixiereinheit bereits fixiert ist zu schaffen.

Ferner profitiert die Messgenauigkeit davon, wenn eine Fixiereinheit zum Fixieren der Hautantasteinheit des Hautantastelements in einer definierten Position vorhanden ist. Auch dies kann, wie bei der Schaumantasteinheit, durch Anpressen eines Pneumatikzylinders realisiert werden. Wichtig ist dies, um sicherzustellen, dass ein etwaiges Eindringen der Nadel in die Hautschicht, z.B. unter dem Druck einer Druckfeder, nicht zu einem Nachfahren der Hautantasteinheit, das die Messung verfälschen würde, führt.

Als vorteilhaft hat es sich erwiesen, wenn das Schaumantastelement Nuten und/oder Durchbrüche zur Verringerung seines Gewichts aufweist, da dadurch eine etwaige Verformung der Kunststoffschaumschicht unter dem Gewicht des Schaumantastelements, welche das Messergebnis verfälschen könnte, vermieden wird.

Überraschenderweise hat sich gezeigt, dass die erreichbare Messgenauigkeit von der Nadelgeometrie und insbesondere von der Form der Nadelspitze abhängig ist. Die besten Ergebnisse erhält man, wenn die Nadel zylinderförmig ist und eine flache Spitze aufweist.

Zweckmäßig ist im Interesse einer möglichst hohen Reproduzierbarkeit der Messergebnisse insbesondere, wenn eine Grundplatte mit einer Positionierhilfe für das Material mit der zumindest abschnittsweise von einer mindestens Seite zugänglichen, auf einer Hautschicht angeordneten Kunststoffschaumschicht vorhanden ist, wobei die Positionierhilfe beispielsweise bei der Untersuchung von Instrumententafeln durch eine Vertiefung, die der Form der Oberseite einer Instrumententafel, welche im eingebauten Zustand vom Fahrzeuginsassen wahrgenommen wird, angepasst ist realisiert sein kann, so dass das Material in einer durch die Positionierhilfe vorgegebenen Position auf der Grundplatte angeordnet ist.

Die Vorrichtung sollte dann bevorzugt in auf der Grundplatte angeordneten Führung- und Positionierelementen so führbar und positionierbar seind, dass das Verfahren von Schaumantasteinheit und Hautantasteinheit die Schaumantasteinheit und die Hautantasteinheit an einer Stelle des Materials, an der die Kunststoffschaumschicht von mindestens einer Seite zugänglich ist und senkrecht zum lokalen Verlauf der Hautschicht an dieser Stelle erfolgt.

Das erfindungsgemäße Verfahren zur zerstörungsfreien Messung der Schichtdicke eines Kunststoffschaums bei einem Material mit einer zumindest abschnittsweise von mindestens einer Seite zugänglichen, auf einer Hautschicht angeordneten Kunststoffschaumschicht wird unter Verwendung einer Vorrichtung durchgeführt, welche zumindest über die folgenden Baugruppen verfügt:
- eine verfahrbare Schaumantasteinheit, die eine Anlagefläche für den Kunststoffschaum aufweist,
- eine verfahrbare Hautantasteinheit, die eine Nadel zum Eindringen in die und Durchdringen der auf der Hautschicht angeordneten Kunststoffschaumschicht bis zur Hautschicht aufweist, und
- einen Sensor zur Bestimmung eines Wegunterschieds zwischen dem bei einem Verfahren der Schaumantasteinheit zurückgelegten Weg und dem bei einem Verfahren der Hautantasteinheit zurückgelegten Weg.

Die Schritte, die das Verfahren mindestens aufweist und die vorzugsweise in dieser Reihenfolge durchgeführt werden sind
- Verfahren der Schaumantasteinheit, bis die Anlagefläche der Schaumantasteinheit an einem zugänglichen Abschnitt der Kunststoffschaumschicht anliegt,
- Verfahren der Hautantasteinheit, bis die Spitze der Nadel der Hautantasteinheit auf die Hautschicht stößt, und
- Bestimmen der Dicke der Kunststoffschaumschicht unter Verwendung des Unterschieds zwischen dem Verfahrweg der Schaumantasteinheit und dem Verfahrweg der Hautantasteinheit.

Bevorzugt ist dabei, wenn Schaumantasteinheit und Hautantasteinheit gemeinsam verfahren werden, bis die Anlagefläche der Schaumantasteinheit an einem zugänglichen Abschnitt der Kunststoffschaumschicht anliegt. Danach wird die Hautantasteinheit weiter verfahren, bis die Spitze der Nadel auf die Hautschicht stößt. Diese Vorgehensweise führt dazu, dass der Unterschied zwischen den jeweiligen Verfahrwegen von Schaum- und Hautantasteinheit besonders leicht bestimmbar ist.

Besonders bevorzugt ist eine automatisierte Ausgestaltung des Verfahrens, die den Einfluss einer individuellen Einschätzung des Bedieners minimiert. Dies wird erreicht, wenn das Aufliegen der Anlagefläche der Schaumantasteinheit am zugänglichen Abschnitt der Kunststoffschaumschicht durch einen Sensor detektiert wird und wenn das weitere Verfahren der Schaumantasteinheit als Reaktion auf das Detektionssignal des Sensors unterbunden wird, was insbesondere dadurch, dass die Schauantasteinheit in der Position, die sie inne hat, wenn die Detektion erfolgt, fixiert wird.

Besonders einfach ist die Bestimmung der Kunststoffschaumdicke, wenn die Position der Schaumantasteinheit und die Position der Hautantasteinheit relativ zueinander so kalibriert werden, dass die Anlagefläche der Schaumantasteinheit und die Spitze der Nadel der Hautantasteinheit in einer Ebene liegen, und zwar insbesondere dann, wenn das Aufliegen der Anlagefläche der Schaumtasteinheit an der Kunststoffschaumschicht detektiert wird.

Vorteilhaft wird das Verfahren weitergebildet, wenn das Stoßen der Spitze der Nadel der Hautantasteinheit an die Hautschicht durch einen Sensor detektiert wird und wenn das weitere Verfahren der Hautantasteinheit als Reaktion auf das Detektionssignal des Sensors unterbunden wird. Dadurch wird eine Veränderung der Position durch ein nachträgliches Eindringen der Nadel in die Hautschicht zuverlässig verhindert.

Besonders bevorzugt ist es für exakte und gut reproduzierbare Messungen, wenn das Material mit der zumindest abschnittsweise von einer mindestens Seite zugänglichen, auf einer Hautschicht angeordneten Kunststoffschaumschicht in einer -beispielsweise wenn eine Messung an Instrumententafeln erfolgt durch eine Vertiefung, die der Form der Oberseite der Instrumententafel, welche im eingebauten Zustand vom Fahrzeuginsassen wahrgenommen wird, angepasst ist- vorgegebenen Position auf einer Grundplatte angeordnet wird und wenn die Vorrichtung in auf der Grundplatte angeordneten Führung- und Positionierelementen so geführt und positioniert wird, dass das Verfahren von Schaumantasteinheit und Hautantasteinheit die Schaumantasteinheit und die Hautantasteinheit an einer Stelle des Materials, an der die Kunststoffschaumschicht von mindestens einer Seite zugänglich ist und senkrecht zum lokalen Verlauf der Hautschicht an dieser Stelle erfolgt.

Die Erfindung wird nachfolgend anhand von Figuren, die ein Ausführungsbeispiel darstellen, näher erläutert. Es zeigt:
- Fig. 1:: eine beispielhafte Veranschaulichung des der Erfindung zu Grunde liegenden Messproblems,
- Fig. 2:: eine Übersichtsdarstellung eines Ausführungsbeispiels der Erfindung,
- Fig. 3:: eine Darstellung der im Ausführungsbeispiel gemäß Figur 2 verbauten Schaumantasteinheit,
- Fig. 4:: eine Darstellung der im Ausführungsbeispiel gemäß Figur 2 verbauten Hautantasteinheit,
- Fig. 5:: eine Explosionsdarstellung der Baugruppe aus Schaumantasteinheit, Hautantasteinheit und Sensor zur Bestimmung eines Wegunterschieds zwischen dem bei einem Verfahren der Schaumantasteinheit zurückgelegten Weg und dem bei einem Verfahren der Hautantasteinheit zurückgelegten Weg,
- Fig.6:: eine Veranschaulichung der Auslösung des Schaltprozesses beim Anlegen der Anlagefläche der Schaumantasteinheit an die Oberfläche des Kunststoffschaums, und
- Fig.7:: eine Veranschaulichung der Auslösung des Schaltprozesses beim Auftreffen der Spitze der Nadel auf die Hautschicht.

Um die Übersichtlichkeit zu verbessern, sind nicht in allen Figuren alle Bauteile mit Bezugszeichen versehen und einige Bauteile in manchen Figuren nicht dargestellt.

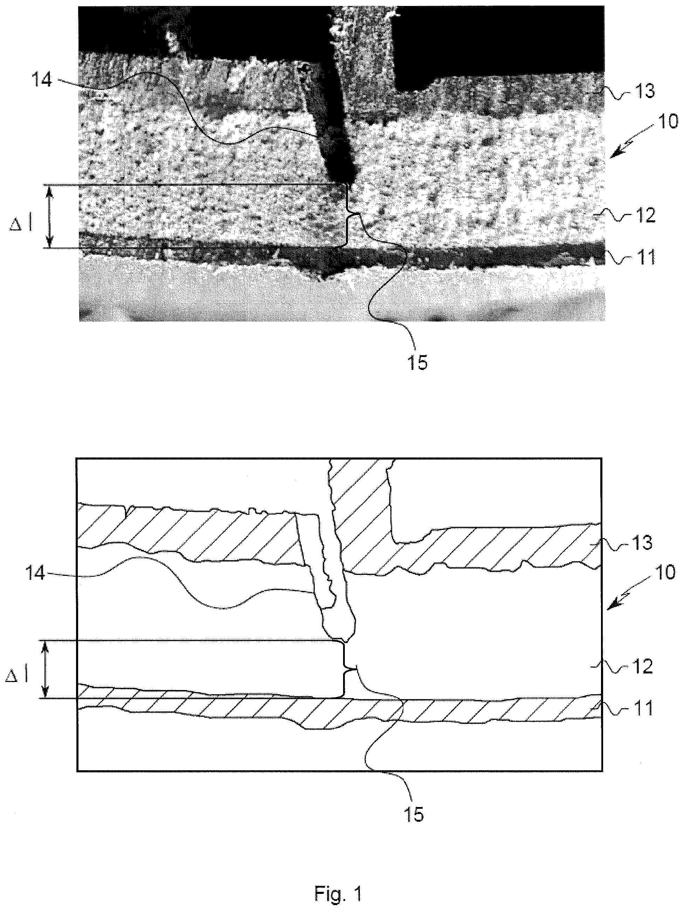

Figur 1 zeigt eine beispielhafte Veranschaulichung des der Erfindung zu Grunde liegenden Messproblems. Man erkennt ein sandwichartig aufgebautes Material 10 mit einer Hautschicht 11 aus PVC, einem Kunststoffschaum 12 in Form von PUR-Schaum und einem Kunststoffträger 13, in das eine Ausfräsung 14 eingebracht ist, so dass die im Bereich der Ausfräsung 14 verbleibende Kunststoffschaumschicht 15 von mindestens einer Seite zugänglich und auf der Hautschicht 11 angeordnet ist. Zu messen ist die Dicke Δl dieser Kunststoffschaumschicht 15.

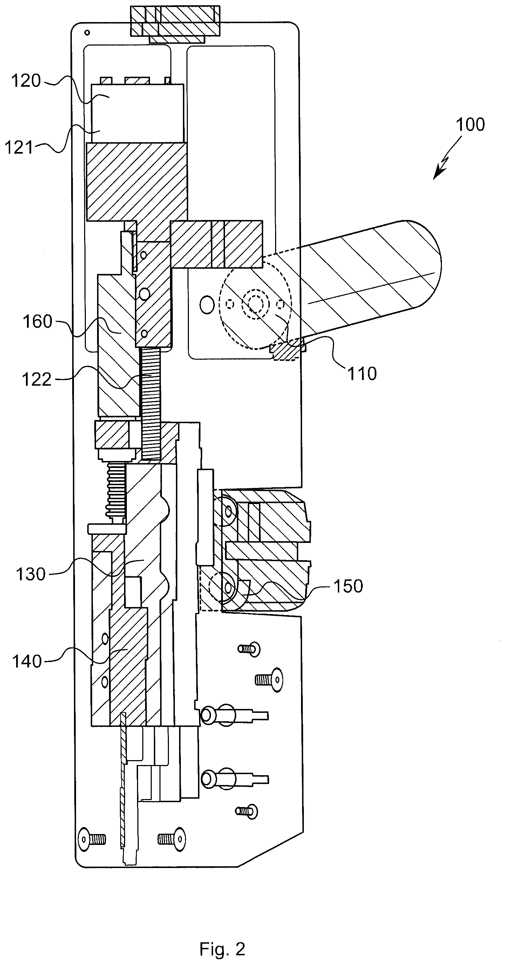

Figur 2 zeigt eine Übersichtsdarstellung eines Ausführungsbeispiels der Vorrichtung 100 zur zerstörungsfreien Messung der Schichtdicke einer Kunststoffschaumschicht bei einem Material gemäß Figur 1. In einem Gehäuse 110 ist eine Antriebseinheit 120 mit Motor 121 und Antriebsspindel 122, eine Schaumantasteinheit 130, eine Hautantasteinheit 140, die von der Antriebsspindel 122 angetrieben wird, eine Fixiereinheit 150 für die Schaumantasteinheit 130 und einen Sensor 160 zur Bestimmung eines Wegunterschieds zwischen dem bei einem Verfahren der Schaumantasteinheit 130 zurückgelegten Weg und dem bei einem Verfahren der Hautantasteinheit 140 zurückgelegten Weg. Nicht dargestellt, ist eine zweite Fixiereinheit für die Hautantasteinheit 140, die auf der Seite des Gehäuses 110 angeordnet ist, die weggelassen wurde, um dem Betrachter den Einblick in das Innere des Gehäuses 110 zu ermöglichen.

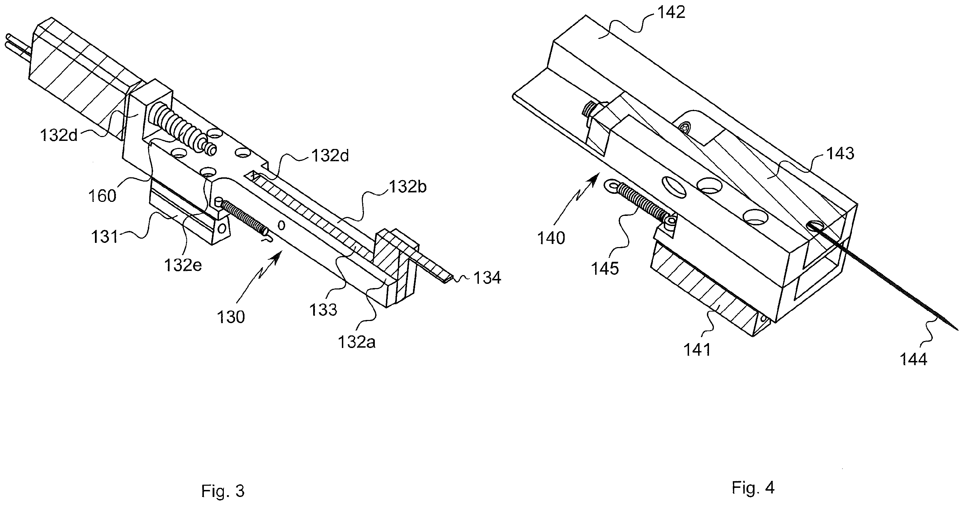

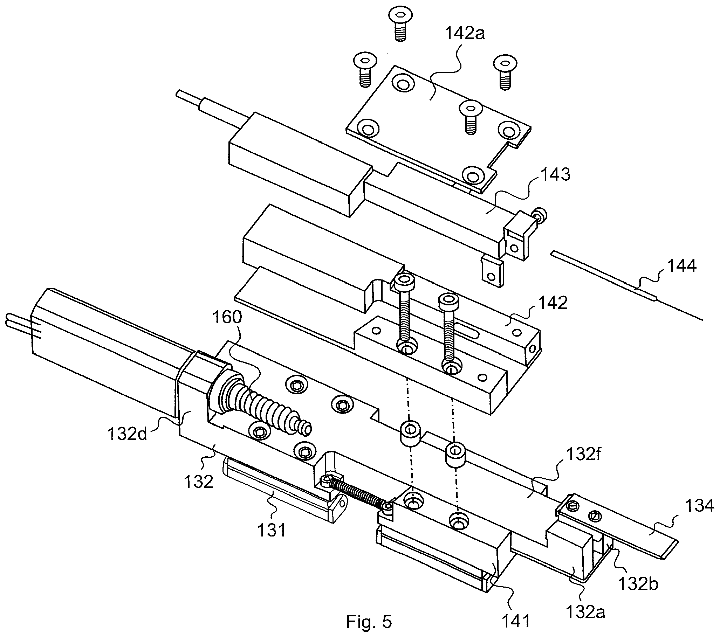

Der prinzipielle Aufbau der Schaumantasteinheit 130 und der Hautantasteinheit 140 ist den Figuren 3 bzw. 4 zu entnehmen. Wie man in Figur 3 sieht, umfasst die Schaumantasteinheit 130 einen Schlitten 131 zur Verfahrung auf einer nicht dargestellten Führungsschiene, so dass eine verfahrbare Schaumantasteinheit 130 vorliegt. Mit dem Schlitten 131 ist über nicht erkennbare Zylinderstifte eine Führung 132 mit Schenkeln 132a und 132b sowie Stirnseite 132c verbunden, die zusätzlich eine Halterung 132d für den Sensor 160 zur Bestimmung eines Wegunterschieds zwischen dem bei einem Verfahren der Schaumantasteinheit 130 zurückgelegten Weg und dem bei einem Verfahren der Hautantasteinheit 140 zurückgelegten Weg aufweist. Ferner sind Gewindebohrungen 132e zur Befestigung eines nur in Figur 5 dargestellten Führungsdeckels 132f vorhanden.

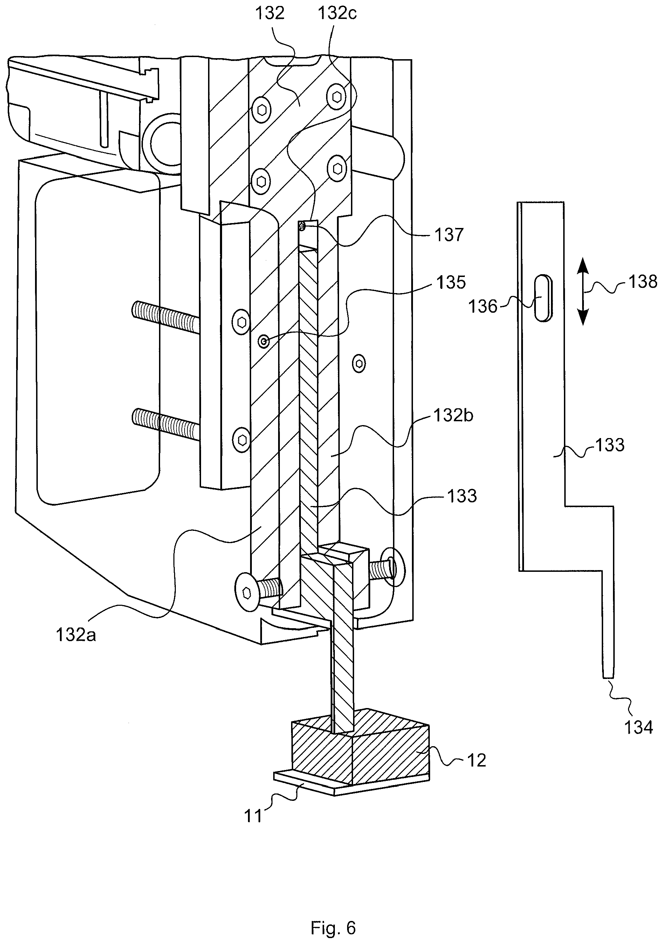

In der Führung 132 geführt ist ein Schaumantastelement 133, an dessen Frontseite eine Anlagefläche 134 angeordnet ist. Wie in Figur 6 zu erkennen ist, erfolgt die Führung über einen Gewindestift 135, welcher in ein im Schaumantastelement 133 angeordnetes Langloch 136 eingreift.

Die in Figur 4 dargestellte Hautantasteinheit 140 umfasst ebenfalls einen Schlitten 141, der gemeinsam mit dem Schlitten 131 der Schaumantasteinheit 130 auf der nicht dargestellten Führungsschiene verschiebbar ist. Die der Führungsschiene gegenüberliegende Oberseite des Schlittens 141 ist U-förmig gestaltet, um, wie man in Figur 5 erkennen kann, im zusammengesetzten Zustand die Schenkel 132a, 132b der Schaumantasteinheit 130 derart zu umgeben, dass diese relativ zum Schlitten 141 der Hautantasteinheit 140 verschiebbar sind. Auf der Oberseite des Schlittens 141 ist eine Führung 142 angeordnet, in der eine Nadelhalterung 143 für eine Nadel 144 geführt ist. Auch für die Führung 142 ist, wie in Figur 5 zu sehen ist, ein Führungsdeckel 142a vorgesehen. Ferner erkennt man in Figur 4 eine Zugfeder 145.

Weitere Details der relativen Anordnung und der Verbindung von Schaumantasteinheit 130 und Hautantasteinheit 140 miteinander lassen sich der Explosionsdarstellung gemäß Figur 5 entnehmen. Insbesondere erkennt man in Figur 5, dass die Schlitten 131,141 über die Zugfeder 145 miteinander verbunden sind, so dass ein Verfahren der Hautantasteinheit 140 dazu führt, dass die Schaumantasteinheit 130 nachgezogen wird, solange sie nicht von der in Figur 2 dargestellten Fixiereinheit 150, die als Pneumatikzylinder ausgeführt ist, durch Ausfahren des Pneumatikzylinders durch Reibung zwischen Pneumatikzylinder und der Führung 132 der Schaumantasteinheit 130 in einer Position fixiert wird. Danach kann sich die angetriebene Hautantasteinheit 140 weiter in die Richtung, in die die Nadel 144 zeigt, bewegen, was allerdings zum Spannen der Zugfeder 145 führt.

Ferner erkennt man in Figur 5, dass die Nadel 144 auswechselbar in der Nadelhalterung 143 verschraubt ist, die Schraubbefestigung der Führung 142 am Schlitten 141 und die Verschraubung der Führungsdeckel 132f bzw. 142a.

Anhand der Darstellung gemäß Figur 6 lässt sich nachvollziehen, wie das Anliegen der Anlagefläche 134 am Kunststoffschaum 12 zu einem Sensorsignal eines an der Stirnseite 132d der Führung angeordneten Sensors 137 zum Detektieren des Wirkens einer Kraft auf die Anlagefläche 134, der in den Figuren 3 und 5 nicht zu erkennen ist, führt. Dadurch, dass das Schaumantastelement 133 ein Langloch 136 aufweist, in das der Gewindestift 135 eingreift, ist eine in Figur 6 durch den Doppelpfeil 138 symbolisierte Verschiebbarkeit des Schaumantastelements 133 relativ zur Führung 132 gegeben. Liegt die Anlagefläche 134 auf dem Kunststoffschaum 12 auf, so führt eine weitere Verschiebung der Führung 132 in Richtung auf den Kunststoffschaum 12 dazu, dass sich der Abstand zwischen Sensor 137 und dem ihm zugewandten Ende des Schaumantastelements 133 verringert. Diese Abstandsänderung veranlasst dann den Sensor 137, ein Signal abzugeben, das die Steuerung der Vorrichtung 100 veranlasst, diese Position als Startposition für die Wegdifferenzmessung durch den Sensor 160 an diesen weiterzuleiten und die Führung 132 an ihrer aktuellen Position mittels der Fixiereinheit 150 zu fixieren.

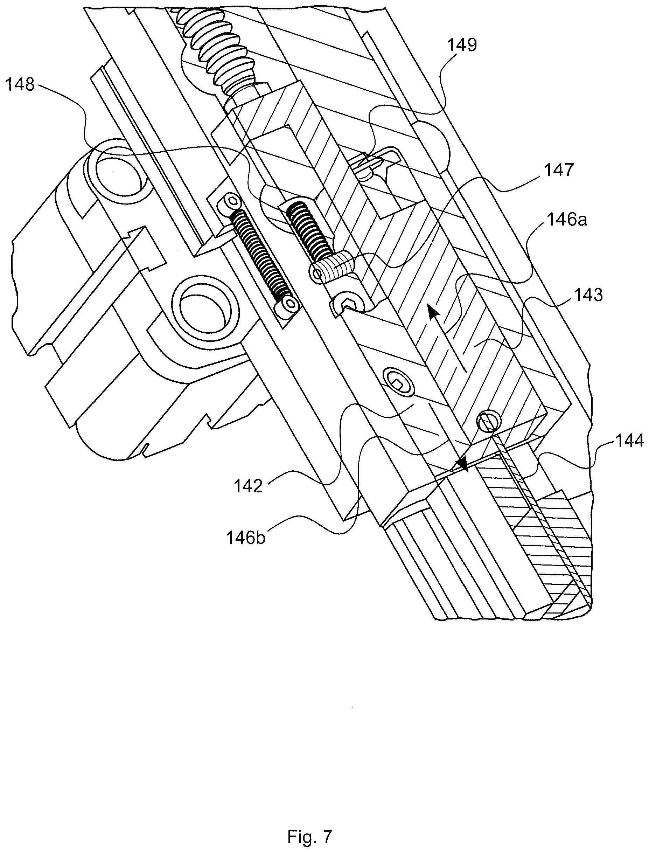

Die Figur 7 verdeutlicht die Auslösung eines Sensorsignals beim Auftreffen der Nadel 144 auf die in Figur 7 nicht dargestellte Hautschicht. Dadurch steigt die auf die Nadelhalterung 143 wirkende Kraft, die durch den Pfeil 146a symbolisiert wird, an. Über einen Gewindestift 147 wird diese Kraft auf eine Druckfeder 148, die an der Führung 142 gelagert ist, weitergegeben und drückt diese zusammen, während sich die Führung 142, wie durch den Pfeil 146b veranschaulicht, weiter angetrieben in Richtung auf die Hautschicht verschiebt. Durch die entstehende Relativbewegung wird der Abstand zwischen einer Detektionsfläche 143a des Nadelhalters 143 und dem an der Führung 142 gelagerten Sensor 149 zum Detektieren des Aufstoßens der Nadel der Hautantasteinheit auf der Hautschicht verringert. Diese Abstandsänderung löst ein Schaltsignal des Sensors 149 aus, das einerseits zum Anschalten des Antriebs und bevorzugt zur Fixierung der Führung 142 mit einer Fixiervorrichtung führt und andererseits an den Sensor 160 zur Bestimmung eines Wegunterschieds zwischen dem bei einem Verfahren der Schaumantasteinheit 130 zurückgelegten Weg und dem bei einem Verfahren der Hautantasteinheit 140 zurückgelegten Weg weitergeleitet wird, um somit das Ende des Verfahrens und das Ende der Wegdifferenzmessung zu bewirken.

### Bezugszeichenliste

- 10: Material
- 11: Hautschicht
- 12: Kunststoffschaum
- 13: Kunststoffträger
- 14: Ausfräsung
- 15: Kunststoffschaumschicht
- 100: Vorrichtung
- 110: Gehäuse
- 120: Antriebseinheit
- 121: Motor
- 122: Antriebsspindel
- 130: Schaumantasteinheit
- 131: Schlitten
- 132: Führung
- 132a,b: Schenkel
- 132c: Stirnseite
- 132d: Halterung
- 132e: Gewindebohrung
- 132f: Führungsdeckel
- 133: Schaumantastelement
- 134: Anlagefläche
- 135: Gewindestift
- 136: Langloch
- 137: Sensor
- 138: Doppelpfeil
- 140: Hautantasteinheit
- 141: Schlitten
- 142: Führung
- 142a: Führungsdeckel
- 143: Nadelhalterung
- 144: Nadel
- 145: Zugfeder
- 146a,b: Pfeil
- 147: Gewindestift
- 148: Druckfeder
- 149: Sensor
- 150: Fixiereinheit
- 160: Sensor
- Δl: Dicke der Kunststoffschaumschicht

## Patentansprüche

1. Vorrichtung (100) zur zerstörungsfreien Messung der
Schichtdicke (Δl) einer Kunststoffschaumschicht (15) bei einem Material (10) mit einer zumindest abschnittsweise von mindestens einer Seite zugänglichen, auf einer Hautschicht (11) angeordneten Kunststoffschaumschicht (15) mit
- einem Gehäuse (110),
- einer im Gehäuse (110) verfahrbaren Schaumantasteinheit (130), die eine Anlagefläche (134) für den Kunststoffschaum (12) aufweist,
- einer im Gehäuse (110) verfahrbaren Hautantasteinheit (140), die eine Nadel (144) zum Eindringen in die und Durchdringen der auf der Hautschicht (11) angeordneten Kunststoffschaumschicht (15) bis zur Hautschicht (11) aufweist, und
- einem Sensor (160) zur Bestimmung eines Wegunterschieds zwischen dem bei einem Verfahren der Schaumantasteinheit (130) zurückgelegten Weg und dem bei einem Verfahren der Hautantasteinheit (140) zurückgelegten Weg.

2. Vorrichtung (100) nach Anspruch 1,
**dadurch gekennzeichnet, dass** ein Sensor (137) zum Detektieren des Wirkens einer Kraft auf die Anlagefläche (134), insbesondere des Aufliegens der Anlagefläche (134) auf dem Kunststoffschaum (12), dessen Signal als Startsignal für die Bestimmung des Wegunterschieds mit dem Sensor (160) zur Bestimmung des Wegunterschieds verwendbar ist, vorhanden ist.

3. Vorrichtung (100) nach Anspruch 2,
**dadurch gekennzeichnet, dass** die verfahrbare Schaumantasteinheit (130) eine Führung (132) aufweist, in der ein Schaumantastelement (133), das die Anlagefläche (134) für den Kunststoffschaum (12) aufweist, derart verschiebbar gelagert ist, dass beim Wirken einer Kraft auf die Anlagefläche (134), insbesondere bei einem Aufliegen der Anlagefläche (134) für den Kunststoffschaum (12) auf dem Kunststoffschaum (12), das Schaumantastelement (133) in der Führung (132) verschoben wird und dass der Sensor (137) zum Detektieren des Wirkens einer Kraft auf die Anlagefläche (134), ein Positions-, Druck- oder Abstandssensor zur Überwachung einer Verschiebung des Schaumantastelements (133) in der Führung (132) ist.

4. Vorrichtung (100) nach einem der Ansprüche 1 bis 3,
**dadurch gekennzeichnet, dass** ein Sensor (149) zum Detektieren des Aufstoßens der Nadel (144) der Hautantasteinheit (140) auf der Hautschicht (11), dessen Signal als Endsignal für die Bestimmung des Wegunterschieds mit dem Sensor(160) zur Bestimmung des Wegunterschieds verwendbar ist, vorhanden ist.

5. Vorrichtung (100) nach Anspruch 4,
**dadurch gekennzeichnet, dass** die verfahrbare Hautantasteinheit (140) eine Nadelhalterung (143), in der die Nadel (144) gelagert ist und eine Führung (142) aufweist, in der die Nadelhalterung (143) derart verschiebbar gelagert ist, dass beim Wirken einer Kraft auf die Nadel (144), die die beim Eindringen in den und Durchdringen des Kunststoffschaums (12) mit der Nadel (144) auf die Nadel (144) wirkende Kraft übersteigt, insbesondere beim Aufstehen der Nadel (144)auf der Hautschicht (11), die Nadelhalterung (143) in der Führung (142) verschoben wird und dass der Sensor (149) zum Detektieren des Aufstoßens der Nadel (144) der Hautantasteinheit (140) auf der Hautschicht (11) ein Positions-, Druck- oder Abstandssensor zur Überwachung einer Verschiebung der Nadelhalterung (143) in der Führung (142) ist.

6. Vorrichtung (100) nach einem der Ansprüche 1 bis 5,
**dadurch gekennzeichnet, dass** die Hautantasteinheit (140) über einen Motor (121) angetrieben wird, dass die Schaumantasteinheit (130) bei einer Bewegung der Hautantasteinheit (140) über eine dehnbare Verbindung (145) zwischen Hautantasteinheit (140) und Schaumantasteinheit (130) mitgezogen wird und dass eine Fixiereinheit (160) zum Fixieren der Schaumantasteinheit (130) in einer Position vorhanden ist.

7. Vorrichtung (100) nach einem der Ansprüche 1 bis 6,
**dadurch gekennzeichnet, dass** eine Fixiereinheit zum Fixieren der Hautantasteinheit (140) in einer Position vorhanden ist.

8. Vorrichtung (100) nach einem der Ansprüche 2 bis 7,
**dadurch gekennzeichnet, dass** das Schaumantastelement (133) Nuten und/oder Durchbrüche zur Verringerung seines Gewichts aufweist.

9. Vorrichtung (100) nach einem der Ansprüche 1 bis 8,
**dadurch gekennzeichnet, dass** die Nadel (144) zylinderförmig ist und eine flache Spitze aufweist.

10. Verfahren zur zerstörungsfreien Messung der Schichtdicke (Δl) einer Kunststoffschaumschicht (15) bei einem Material (10) mit einer zumindest abschnittsweise von mindestens einer Seite zugänglichen, auf einer Hautschicht (11) angeordneten Kunststoffschaumschicht (15) unter Verwendung einer Vorrichtung (100) nach einem der Ansprüche 1 bis 9 mit den Schritten
- Verfahren der Schaumantasteinheit (130), bis die Anlagefläche (134) der Schaumantasteinheit (130) an einem zugänglichen Abschnitt der Kunststoffschaumschicht (15) anliegt,
- Verfahren der Hautantasteinheit (140), bis die Spitze der Nadel (144) der Hautantasteinheit (140) auf die Hautschicht (11) stößt,und
- Bestimmen der Schichtdicke (Δl) der Kunsstoffschaumschicht (15) unter Verwendung des mit dem Sensor (160) zur Bestimmung eines Wegunterschieds zwischen dem bei einem Verfahren der Schaumantasteinheit (130) zurückgelegten Weg und dem bei einem Verfahren der Hautantasteinheit (140) zurückgelegten Weg ermittelten Unterschieds zwischen dem Verfahrweg der Schaumantasteinheit (130) und dem Verfahrweg der Hautantasteinheit (140).

11. Verfahren nach Anspruch 10,
**dadurch gekennzeichnet, dass** Schaumantasteinheit (130) und Hautantasteinheit (140) gemeinsam verfahren werden, bis die Anlagefläche (134) der Schaumantasteinheit (130) an einem zugänglichen Abschnitt der Kunststoffschaumschicht(15) anliegt.

12. Verfahren nach Anspruch 10 oder 11,
**dadurch gekennzeichnet, dass** das Anliegen der Anlagefläche (134) der Schaumantasteinheit (130) am zugänglichen Abschnitt der Kunststoffschaumschicht (15) durch einen Sensor (137) detektiert wird und dass das weitere Verfahren der Schaumantasteinheit (130) als Reaktion auf das Detektionssignal des Sensors unterbunden wird.

13. Verfahren nach Anspruch 12,
**dadurch gekennzeichnet, dass** die Position der Schaumantasteinheit (130) und die Position der Hautantasteinheit (140) relativ zueinander so kalibriert werden, dass die Anlagefläche (134) der Schaumantasteinheit (130) und die Spitze der Nadel (144) der Hautantasteinheit (140) in einer Ebene liegen, wenn die Anlagefläche (134) der Schaumantasteinheit (130) in Kontakt mit dem Kunststoffschaum (12) kommt.

14. Verfahren nach einem der Ansprüche 10 bis 13,
**dadurch gekennzeichnet, dass** das Stoßen der Spitze der Nadel (144) der Hautantasteinheit (140) auf die Hautschicht (11) durch einen Sensor (149) detektiert wird und dass das weitere Verfahren der Hautantasteinheit (140) als Reaktion auf das Detektionssignal des Sensors (149) unterbunden wird.

15. Verfahren nach einem der Ansprüche 10 bis 14,
**dadurch gekennzeichnet, dass** das Material (10) mit der zumindest abschnittsweise von einer mindestens Seite zugänglichen, auf einer Hautschicht (11) angeordneten Kunststoffschaumschicht (15) in einer vorgegebenen Position auf einer Grundplatte angeordnet wird und dass die Vorrichtung in auf der Grundplatte angeordneten Führungs- und Positionierelementen so geführt und positioniert wird, dass das Verfahren von Schaumantasteinheit (130) und Hautantasteinheit (140) die Schaumantasteinheit (130) und die Hautantasteinheit (140) an einer Stelle des Materials (10), an der die Kunststoffschaumschicht (15) von mindestens einer Seite zugänglich ist und senkrecht zum lokalen Verlauf der Hautschicht (11) an dieser Stelle erfolgt.

## Claims

1. A device (100) for the non-destructive measurement of the layer thickness (Δ1) of a plastic foam layer (15) on a material (10) having a plastic foam layer (15) that is provided, at least in sections, on a skin layer (11) that is accessible from at least one side, comprising
- a housing (110),
- a foam contacting unit (130) that can be traversed within the housing (110), which foam contacting unit has an abutment surface (134) for the plastic foam (12),
- a skin contacting unit (140) that can be traversed within the housing (110), which skin contacting unit has a needle (144) for piercing and penetrating the plastic foam layer (15) provided on the skin layer (11) up to the skin layer (11), and
- a sensor (160) for determining a path difference between the path travelled during the traversing of the foam contacting unit (130) and the path travelled during the traversing of the skin contacting unit (140).

2. The device (100) as claimed in claim 1, **characterised in that** a sensor (137) is provided for detecting the effect of a force on the abutment surface (134), in particular the resting of the abutment surface (134) on the plastic foam (12), the signal of which can be used as a starting signal for determining the path difference using the sensor (160) for determining the path difference.

3. The device (100) as claimed in claim 2, **characterised in that** the traversable foam contacting unit (130) has a guide (132), in which a foam contacting element (133) having the abutment surface (134) for the plastic foam (12) is supported so as to be displaceable in such a way that during the effect of a force on the abutment surface (134), in particular during the resting of the abutment surface (134) for the plastic foam (12) on the plastic foam (12), the foam contacting element (133) is displaced within the guide (132), and **in that** the sensor (137) for detecting the effect of a force on the abutment surface (134) is a position, pressure or distance sensor for monitoring a displacement of the foam contacting element (133) in the guide (132).

4. The device (100) as claimed in any one of claims 1 to 3, **characterised in that** a sensor (149) is provided for detecting the striking of the needle (144) of the skin contacting unit (140) on the skin layer (11), the signal of which can be used as an end signal for determining the path difference using the sensor (160) for determining the path difference.

5. The device (100) as claimed in claim 4, **characterised in that** the traversable skin contacting unit (140) has a needle holder (143), in which the needle (144) is supported, and a guide (142), in which the needle holder (143) is supported so as to be displaceable in such a way that during the effect of a force on the needle (144), which exceeds the force acting on the needle (144) during the piercing and penetration of the plastic foam (12) by the needle (144), in particular whilst the needle (144) is standing upright on the skin layer (11), the needle holder (143) is displaced within the guide (142), and **in that** the sensor (149) for detecting the striking of the needle (144) of the skin contacting unit (140) on the skin layer (11) is a position, pressure and distance sensor for monitoring a displacement of the needle holder (143) within the guide (142).

6. The device (100) as claimed in any one of claims 1 to 5, **characterised in that** the skin contacting unit (140) is driven via a motor (121), **in that** the foam contacting unit (130) is entrained during a movement of the skin contacting unit (140) via an elastic connection (145) between the skin contacting unit (140) and the foam contacting unit (130), and **in that** a fixing unit (160) for fixing the foam contacting unit (130) in a position is provided.

7. The device (100) as claimed in any one of claims 1 to 6, **characterised in that** a fixing unit for fixing the skin contacting unit (140) in a position is provided.

8. The device (100) as claimed in any one of claims 2 to 7, **characterised in that** the foam contacting element (133) has grooves and/or breakthroughs for reducing the weight thereof.

9. The device (100) as claimed in any one of claims 1 to 8, **characterised in that** the needle (144) is cylindrical and has a flat point.

10. A method for the non-destructive measurement of the layer thickness (Δ1) of a plastic foam layer (15) on a material (10) having a plastic foam layer (15) provided, at least in sections, on a skin layer (11) that is accessible from at least one side, using a device (100) as claimed in any one of claims 1 to 9, comprising the following steps:
- traversing the foam contacting unit (130) until the abutment surface (134) of the foam contacting unit (130) abuts against an accessible section of the plastic foam layer (15),
- traversing the skin contacting unit (140) until the point of the needle (144) of the skin contacting unit (140) strikes on the skin layer (11), and
- determining the layer thickness (Δ1) of the plastic foam layer (15) using the difference between the path travelled by the foam contacting unit (130) and the path travelled by the skin contacting unit (140), as determined using the sensor (160) for determining a path difference between the path travelled during the traversing of the foam contacting unit (130) and the path travelled during the traversing of the skin contacting unit (140).

11. The method as claimed in claim 10, **characterised in that** the foam contacting unit (130) and the skin contacting unit (140) are traversed together until the abutment surface (134) of the foam contacting unit (130) abuts against an accessible section of the plastic foam layer (15).

12. The method as claimed in claim 10 or 11, **characterised in that** the abutment of the abutment surface (134) of the foam contacting unit (130) on the accessible section of the plastic foam layer (15) is detected by a sensor (137) and the further traversing of the foam contacting unit (130) is prevented as a response to the detection signal of the sensor.

13. The method as claimed in claim 12, **characterised in that** the position of the foam contacting unit (130) and the position of the skin contacting unit (140) are calibrated relative to each other in such a way that the abutment surface (134) of the foam contacting unit (130) and the point of the needle (144) of the skin contacting unit (140) are in one plane when the abutment surface (134) of the foam contacting unit (130) comes into contact with the plastic foam (12).

14. The method as claimed in any one of claims 10 to 13, **characterised in that** the striking of the point of the needle (144) of the skin contacting unit (140) onto the skin layer (11) is detected by a sensor (149), and **in that** any further traversing of the skin contacting unit (140) is prevented as a response to the detection signal of the sensor (149).

15. The method as claimed in any one of claims 10 to 14, **characterised in that** the material (10) is disposed with the plastic foam layer (15) that provided, at least in sections, on a skin layer (11) accessible from at least one side, in a predefined position on a base plate, and **in that** the device is guided and positioned in guiding and positioning elements provided on the base plate in such a way that the traversing of the foam contacting unit (130) and the skin contacting unit (140) is carried out in a position of the material (10) on which the plastic foam layer (15) is accessible from at least one side and runs perpendicular to the local run of the skin layer (11) in this place.

## Revendications

1. Dispositif (100) permettant la mesure non destructrice de l'épaisseur (Δ1) d'une couche de mousse synthétique (15) dans un matériau (10) ayant une couche de mousse synthétique (15) accessible au moins par segments à partir d'au moins un côté, appliquée sur une couche de peau (11), dispositif comportant :
- un boîtier (110),
- une unité de palpation de la mousse (130) mobile dans le boîtier (110) qui comporte une surface d'appui (134) pour la mousse de matériau synthétique (12),
- une unité de palpation de la peau (140) mobile dans le boîtier (110) qui comporte une aiguille (144) susceptible de pénétrer dans la couche (15) de mousse de matériau synthétique située sur la couche de peau (11) et de traverser celle-ci jusqu'à la couche de peau (11), et
- un capteur (160) permettant de déterminer la différence de distance entre la distance parcourue lors d'un déplacement de l'unité de palpation de la mousse (130) et la distance parcourue lors d'un déplacement de l'unité de palpation de peau (140).

2. Dispositif (100) conforme à la revendication 1,
**caractérisé en ce qu'**
il est prévu un capteur (137) permettant de détecter l'action d'une force sur la surface d'appui (134), en particulier l'application de la surface d'appui (134) sur la mousse en matériau synthétique (12) dont le signal peut être utilisé en tant que signal de départ pour la détermination de la différence de distance avec le capteur (160) permettant de déterminer la différence de distance.

3. Dispositif (100) conforme à la revendication 2,
**caractérisé en ce que**
l'unité de palpation de la mousse mobile (130) comporte un guidage (132) dans lequel est logé coulissant un élément de palpation de la mousse (133) qui comporte la surface d'appui (134) pour la mousse de matériau synthétique (12) de sorte que, lors d'une action d'une force sur la surface d'appui (134), en particulier lors de l'application de la surface d'appui (134) pour la mousse en matériau synthétique (12) sur cette mousse en matériau synthétique (12), l'élément de palpation de la mousse (133) coulisse dans le guidage (132), et le capteur (137) permettant de détecter l'action d'une force sur la surface d'appui (134) est un capteur de position, un capteur de pression ou un capteur d'éloignement permettant de surveiller une translation de l'élément de palpation de la mousse (133) dans le guidage (132).

4. Dispositif (100) conforme à l'une des revendications 1 à 3,
**caractérisé en ce qu'**
il est prévu un capteur (149) permettant de détecter l'impact de l'aiguille (144) de l'unité de palpation de la peau (140) sur la couche de peau (11) dans le signal peut être utilisé en tant que signal final pour la détection de la différence de distance avec le capteur (160) permettant de déterminer la différence de distance.

5. Dispositif (100) conforme à la revendication 4,
**caractérisé en ce que**
l'unité de palpation de la peau mobile (140) comporte une fixation d'aiguille (143) dans laquelle est montée l'aiguille (144) et un guidage (142) dans lequel la fixation d'aiguille (143) est montée mobile en translation de sorte que, en cas d'action sur l'aiguille (144), d'une force qui dépasse la force agissant sur cette aiguille (144) lors de sa pénétration dans la mousse de matériau synthétique (12) et de son passage au travers de celle-ci, en particulier en cas d'arrêt de l'aiguille (144) sur la couche de peau (11), la fixation d'aiguille (143) soit déplacée par translation dans le guidage (142), et le capteur (149) permettant de détecter l'impact de l'aiguille (144) de l'unité (140) de palpation de la peau sur la couche de peau (11), est un capteur de position, un capteur de pression ou un capteur d'éloignement permettant de surveiller une translation de la fixation d'aiguille (143) dans le guidage (142).

6. Dispositif (100) conforme à l'une des revendications 1 à 5,
**caractérisé en ce que**
l'unité de palpation de la peau (140) est entraînée par un moteur (121), en présence d'un déplacement de l'unité de palpation de la peau (140) l'unité de palpation de la mousse (130), est entraînée par l'intermédiaire d'une liaison extensible (145) entre l'unité de palpation de la peau (140) et l'unité de palpation de la mousse (130), et il est prévu une unité de fixation (160) permettant de fixer l'unité de palpation de la mousse (130) dans une position.

7. Dispositif (100) conforme à l'une des revendications 1 à 6,
**caractérisé en ce qu'**
il est prévu une unité de fixation permettant de fixer l'unité de palpation de la peau (140) dans une position.

8. Dispositif (100) conforme à l'une des revendications 2 à 7,
**caractérisé en ce que**
l'élément de palpation de la mousse (133) comporte des rainures et/ou des évidements permettant de diminuer son poids.

9. Dispositif (100) conforme à l'une des revendications 1 à 8,
**caractérisé en ce que**
l'aiguille (144) est en forme de cylindre et a une pointe plate.

10. Procédé permettant la mesure non destructrice de l'épaisseur (Δ1) d'une couche de mousse en matériau synthétique (15) dans un matériau (10) ayant une couche de mousse synthétique (15) accessible au moins par segments à partir d'au moins un côté, appliquée sur une couche de peau (11), en utilisant un dispositif (100) conforme à l'une des revendications 1 à 9, comprenant des étapes consistant à :
- déplacer l'unité de palpation de la mousse (130) jusqu'à ce que la surface d'appui (134) de celle-ci s'applique sur un segment accessible de la couche de mousse de matériau synthétique (15),
- déplacer l'unité de palpation de la peau (140) jusqu'à ce que la pointe de son aiguille (144) vienne en impact sur la couche de peau (11), et
- déterminer l'épaisseur (Δ1) de la couche de mousse de matériau synthétique (15) en utilisant la différence entre la distance parcourue par l'unité de palpation de la mousse (130) et la distance parcourue par l'unité de palpation de la peau (140) déterminée avec le capteur (160) permettant de déterminer la différence entre la distance parcourue lors d'un déplacement de l'unité de palpation de la mousse (130) et la distance parcourue lors d'un déplacement de l'unité de palpation de la peau (140).

11. Procédé conforme à la revendication 10,
**caractérisé en ce que**
l'unité de palpation de la mousse (130) et l'unité de palpation de la peau (140) sont déplacées conjointement jusqu'à ce que la surface d'appui (134) de l'unité de palpation de la mousse (130) s'applique contre un segment accessible de la couche de mousse de matériau synthétique (15).

12. Procédé conforme à la revendication 10 ou 11,
**caractérisé en ce que**
l'application de la surface d'appui (134) de l'unité de palpation de la mousse (130) contre le segment accessible de la couche de mousse en matériau synthétique (15) est détectée par un capteur (137), et un déplacement ultérieur de l'unité de palpation de la mousse (130) est arrêté en réponse au signal de détection du capteur.

13. Procédé conforme à la revendication 12,
**caractérisé en ce que**
la position de l'unité de palpation de la mousse (130) et la position de l'unité de palpation de la peau (140) sont calibrées l'une par rapport à l'autre de sorte que la surface d'appui (134) de l'unité de palpation de la mousse (130) et la pointe de l'aiguille (144) de l'unité de palpation de la peau (140) soit situées dans un plan lorsque la surface d'appui (134) de l'unité de palpation de la mousse (130) vient en contact avec la mousse en matériau synthétique (12).

14. Procédé conforme à l'une des revendications 10 à 13,
**caractérisé en ce que**
l'impact de la pointe de l'aiguille (144) de l'unité de palpation de la peau (140) sur la couche de peau (11) est détecté par un capteur (149), et un déplacement ultérieur de l'unité de palpation de la peau (140) est arrêté en réponse au signal de détection du capteur (149).

15. Procédé conforme à l'une des revendications 10 à 14,
**caractérisé en ce que**
le matériau (10) comportant une couche de mousse en matériau synthétique (15) accessible au moins par segments à partir d'au moins un côté, appliquée sur une couche de peau (11) est positionné dans une position déterminée sur une plaque de base, et le dispositif est guidé et positionné sur des éléments de guidage et de positionnement montés la plaque de base de sorte que le déplacement de l'unité de palpation de la mousse (130) et le déplacement de l'unité de palpation de la peau (140) déplace l'unité de palpation de la mousse (130) et l'unité de palpation de la peau (140) dans une position du matériau (10) où la couche de mousse en matériau synthétique (15) est accessible à partir d'au moins un côté et perpendiculairement à l'extension locale de la couche de peau (11) dans cette position.
